**Europäisches Patentamt**

**European Patent Office**

**Office européen des brevets**

(19)

(11) Veröffentlichungsnummer: **0 123 683**
**B1**

(12) # EUROPÄISCHE PATENTSCHRIFT

(45) Veröffentlichungstag der Patentschrift:
**07.01.88**

(51) Int. Cl.⁴: **F 16 B 7/04, E 04 B 2/76**

(21) Anmeldenummer: **83903166.3**

(22) Anmeldetag: **28.10.83**

(86) Internationale Anmeldenummer:
**PCT/CH 83/00120**

(87) Internationale Veröffentlichungsnummer:
**WO 84/01801 (10.05.84 Gazette 84/12)**

(54) **KLEMMVORRICHTUNG ZUM LÖSBAREN VERBINDEN ZWEIER PROFILSTÜCKE.**

(30) Priorität: **01.11.82 CH 6346/82**

(43) Veröffentlichungstag der Anmeldung:
**07.11.84 Patentblatt 84/45**

(45) Bekanntmachung des Hinweises auf die Patenterteilung:
**07.01.88 Patentblatt 88/1**

(84) Benannte Vertragsstaaten:
**AT BE CH DE FR GB LI LU NL SE**

(56) Entgegenhaltungen:
**FR - A - 2 299 546**
**GB - A - 2 015 686**

(73) Patentinhaber: **SYMA INTERCONTINENTAL AG,
Rosenberg, CH-9533 Kirchberg (CH)**

(72) Erfinder: **STRÄSSLE, Marcel, Rosenberg,
CH-9533 Kirchberg (CH)**

(74) Vertreter: **White, William et al,
PATENTANWALTS-BUREAU ISLER AG
Postfach 6940 Walchestrasse 23, CH-8023 Zürich (CH)**

ACTORUM AG

**Beschreibung**

Die Erfindung betrifft eine Klemmvorrichtung zum lösbaren Verbinden zweier Profilstücke gemäss dem Oberbegriff des Patentanspruchs 1.

Eine Klemmvorrichtung dieser Art ist z.B. aus der CH-PS 632 064 bekannt. Sie wird zur Montge von Gestellen verwendet, die aus vertikalen Stützen und horizontalen Trägern bestehen. An jedem Ende eines horizontalen Trägers ist eine Klemmvorrichtung angeordnet, wobei der Kopf des Ankerbolzens in eine Längsnut eines der senkrechten Träger eingeführt ist. Mittels einer exzentrisch versetzten Schraube wird der Ankerbolzen entgegen der Kraft der Feder nach innen gezogen, um den Träger an der Stütze zu fixieren.

Die Montage der Klemmvorrichtung ist umständlich, da der Ankerbolzen in die Bohrung des Einsatzkerns hineingedrückt und gehalten werden muss, bis die exzentrisch versetzte Schraube eingesetzt ist. Beim Zusammenbau des Gestells kann es zu Fehlmanipulationen kommen, wenn die exzentrisch versetzte Schraube in falscher Richtung gedreht wird, so dass ihre Spitze die konische Ausnehmung des Ankerbolzens freigibt und dieser durch die Feder aus dem Einsatzkern gestossen wird.

Um diesen Nachteil zu beheben ist es aus der GB-A 2 015 686 bekannt geworden, den Ankerbolzen zu sichern. Dazu weist dieser an dem dem Kopf entgegengesetzten Endteil eine zylindrische Partie auf die mit mehreren ringförmigen Leisten mit dazwischenliegenden Nuten versehen ist. Der Einsatzkern weist hinter der Partie mit der Schraube zwei sich gegenüberliegende Querrippen an der Innenseite auf. Diese Querrippen halten den Ankerbolzen zurück, wenn die Schraube entfernt ist und dieser unter der Kraft der Feder nach vorn gestossen wird.

Nachteilig an dieser Lösung ist, dass der Einsatzkern für das Einsetzen des Ankerbolzens zweiteilig ausgebildet sein muss, und dass bei einer späteren Notwendigkeit für einen Ersatz des Ankerbolzens zuerst der Einsatzkern ausgebaut und zerlegt werden muss. Da dies meist beim Aufbau eines Gestells notwendig wird, ist es natürlich sehr kompliziert, wenn dann fünf Teile wieder zusammengestellt werden müssen.

Es ist deshalb eine Aufgabe der Erfindung diese Nachteile zu beheben und die Rückhaltung des Ankerbolzens auf eine einfache, leicht demontierbare Art zu lösen.

Erfindungsgemäss wird dies in einer ersten Ausbildungsform nach den Merkmalen im kennzeichnenden Teil des Patentanspruchs 1 und in einer zweiten Ausbildungsform nach den Merkmalen im kennzeichnenden Teil des Patentanspruchs 2 erreicht.

Die Erfindung wird nachfolgend anhand der Zeichnung erläutert. Es zeigen:

Fig. 1 eine Schnittansicht einer Verbindungsstelle in einem Gestell, mit einem Einsatzkern und dem Ankerbolzen in einer ersten Ausbildungsform, und

Fig. 2 eine Schnittansicht ähnlich derjenigen in Fig. 1 mit einem Einsatzkern und einem Ankerbolzen in einer zweiten Ausbildungsform.

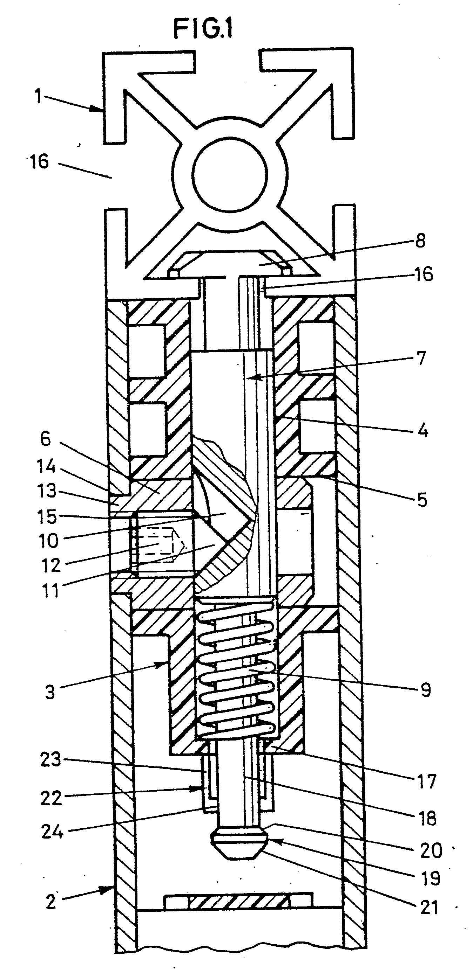

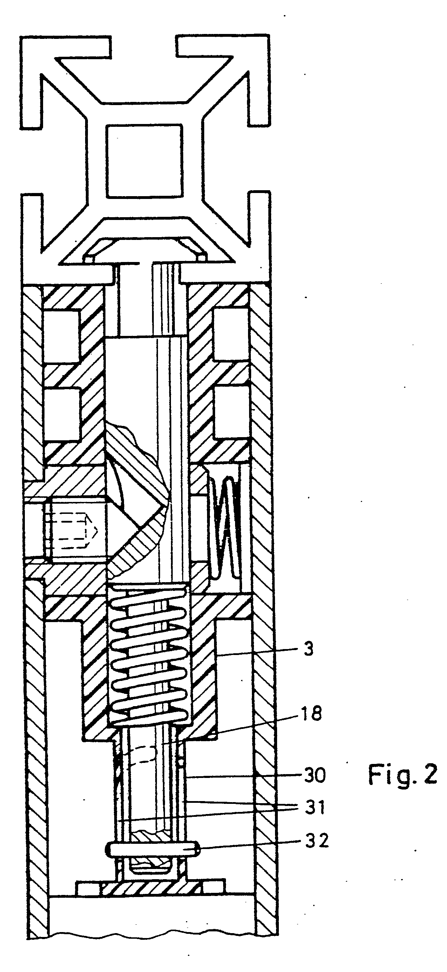

Das in Fig. 1 und 2 dargestellte Gestell weist eine senkrechte Stütze 1 und einen mit dieser lösbar verbundenen Querträger 2 auf. Im Ende des Querträgers 2 ist ein mit einer nicht durchgehenden Längsbohrung 4 und einer Querbohrung 5 versehener Kunststoff-Einsatzkern 3 eingeschoben und mittels einer in der Querbohrung 5 sitzenden Gewindebüchse 6 festgehalten. Ein in der Längsbohrung 4 des Einsatzkerns 3 längsverschiebbar gelagerter, mit einem T-förmigen Ankerkopf 8 versehener Ankerbolzen 7 ist gegen eine Feder 9 gepresst, welche ihrerseits in der Längsbohrung 4 untergebracht ist und an einer inneren Kreisrippe 17 der Bohrungswand abgestützt ist.

Im Bolzen 7 ist eine konische Ausnehmung 10 vorgesehen, in welche das konische Ende 11 einer in der Gewindebüchse 6 geführten Schraube 12 exzentrisch hineinragt. Eine Randpartie 13 der Gewindebüchse 6 steckt in einer entsprechenden Öffnung 14 des Querträgers 2 und hält so den Einsatzkern 3 in seiner korrekten Lage. Die Büchse 6 weist ferner eine Bohrung 15 auf, durch welche der Bolzen 7 durchgeführt ist.

Die Stütze 1 ist mit vier hinterschnittenen Längsnuten 16 versehen, in welche der Ankerkopf 8 eingeschoben werden kann, wobei dann der Ankerkopf 8 die Nuten 16 hintergreift.

Der Ankerbolzen 7 weist eine hintere Verlängerung auf in Form einer Stange 18, deren Ende ein erweitertes Teilstück 19 trägt. Dieses Teilstück 19 ist beidseitig mit umlaufenden Anschrägungen 20, 21 versehen, wobei die Anschrägungen einen Winkel von 45° mit der Längsachse des Ankerbolzens bilden. Auch der Einsatzkern 3 ist hinten verlängert in Form einer Schnapphalterung 22 mit flexiblen Wandteilen 23, deren Enden nach innen ragende Nocken 24 aufweisen.

Beim Zusammenbau der Klemmvorrichtung wird zuerst der Einsatzkern 3 in den horizontalen Träger 2 eingeschoben und mittels der Gewindebüchse 6 fixiert. Nun werden die Feder 9 und der Ankerbolzen 7 in die Längsbohrung 4 des Einsatzkernes hineingeschoben. Dabei drückt die Schrägfläche 21 des erweiterten Endstückes 19 die flexiblen Wandteile 23 auseinander, bis die Nocken 24 hinter dem Teilstück 19 federnd einrasten. Der Ankerbolzen 7 ist nun im Einsatzkern 3 gehalten, und die exzentrisch versetzte Schraube 12 kann in die Gewindebüchse 6 eingeschraubt werden.

Um den Ankerbolzen aus dem Einsatzkern zu entfernen, wird zuerst die Schraube aus der exzentrisch versetzten Ausnehmung im Ankerbolzen entfernt und dann der Ankerbolzen nach aussen gezogen, z.B. mittels eines Werkzeuges, das am Ankerkopf angesetzt wird. Die innere Schrägfläche 20 drückt die Nocken 24 auseinander, so dass der Ankerbolzen freigegeben wird.

In einer anderen Ausgestaltung kann zusätzlich noch vorgesehen sein, dass Ankerbolzen 7 und T-förmiger Kopf 8 bei der axialen Verschiebung eine Drehung um 90° ausführen. Dazu muss anstelle der Schnapphalterung eine Hülse 30 einstückig angeformt sein, in deren Wand wenigstens eine wendelartig auf einen Viertelkreis verlaufende Führungsnut 31 vorhanden ist. In der Stange 18 muss dann anstelle des Kopfes 19 ein diagonal angeordneter Stift 32 eingesetzt sein.

Die Führungsnut 31 kann einseitig oder diagonal zweiseitig sein und entsprechend ist dann der Stift 32 entweder durchgehend oder einseitig in die Stange 18 eingesetzt. Der Verlauf der Führungsnut 31 kann an sich beliebig gewählt sein, jedoch für ein gutes Zusammenwirken mit der Schraube 12 und der konischen Ausnehmung 10 sollte die Führungsnut 31 auf ihrem hinteren Teil geradlinig axial verlaufen und erst in der letzten vorderen Partie den wendelförmigen Viertelkreis beschrieben.

## Patentansprüche

1. Klemmvorrichtung zum lösbaren Verbinden zweier Profilstücke (1, 2), wobei in einem der Profilstücke (2) ein Einsatzkern (3) angeordnet ist, in welchem ein axial beweglicher, federbelasteter Ankerbolzen (7) gelagert ist, dessen T-förmiger Kopf (8) eine Längsnut (16) im andern Profilstück (1) hintergreift, und wobei eine in einer Gewindebüchse (6) geführte Schraube (12) mit konischer Spitze (11) exzentrisch versetzt in eine seitliche konische Ausnehmung (10) des Ankerbolzens (7) eingreift, um diesen axial zu verschieben, und welcher Ankerbolzen (7) einschnappbar in einen hinteren Teil (22) des Einsatzkernes (3) eingerastet ist, indem der Einsatzkern (3) eine Schnapphalterung (22) aufweist, welche mit dem hinteren Ende (19) des Ankerbolzens zusammenwirkt, dadurch gekennzeichnet, dass der Ankerbolzen (7) durch eine Stange (18) mit einem erweiterten Endteil (19) verlängert ist, und dass der Einsatzkern (3) mit Spreizfingern (23) versehen ist und nach innen ragende Nocken (24) aufweist, um den erweiterten Endteil (19) zu hintergreifen.

2. Klemmvorrichtung nach Anspruch 1, wobei die Schnapphalterung durch eine einstückig angeformte Hülse (30) mit wenigstens einem Längsschlitz (31), in dem ein in der Stange (18) diagonal angeordneter Stift (32) geführt ist, ersetzt ist.

3. Vorrichtung nach Anspruch 2, dadurch gekennzeichnet, dass sich der Längsschlitz (31) wendelartig über einen Viertelkreisbogen ausdehnt, um den Kopf (8) mit einer axialen Verschiebung um 90° zu drehen.

## Claims

1. A clamping device for releasably connecting two profiled parts (1, 2) wherein disposed in one of the profiled parts (2) is an insert core (3) in which an axially movable, spring-loaded tie bolt (7) is mounted, the T-shaped head (8) of which engages behind a longitudinal groove (16) in the other profiled part (1), and wherein a screw (12) guided in a threaded bush (6) and having a conical tip (11) engages, eccentrically offset, in a lateral conical recess (10) in the tie bolt (7) in order to displace this axially, and which tie bolt (7) is snapped into a rear portion (22) of the insert core (3), in that the insert core (3) comprises a snap holding means (22) which cooperates with the rear end (19) of the tie bolt, characterised in that the tie bolt (7) is extended by a rod (18) with a widened end portion (19) and that the insert core (3) is provided with expanding fingers (23) and comprises dogs (24) projecting inwards to engage behind the widened end portion (19).

2. A clamping device as claimed in Claim 1 wherein the snap holding means is replaced by a sleeve (30) which is made integral and has at least one longitudinal slot (31) in which a pin (32) arranged diagonally in the rod (18) is guided.

3. A device as claimed in Claim 2, characterised in that the longitudinal slot (31) extends helically over a quarter of an arc in order to turn the head (8) through 90° with an axial displacement.

## Revendications

1. Dispositif de serrage pour relier de manière détachable deux pièces profilées (1, 2), un noyau d'insertion (3) étant placé dans l'une des pièces profilées (2), noyau dans lequel est placé un boulon d'ancrage (7) soumis à l'action d'un ressort, mobile axialement, dont la tête en T (8) s'engage derrière une rainure longitudinale (16) formée dans l'autre pièce profilée (1), et une vis (12) à pointe conique (11) guidée dans une douille taraudée (6) s'engageant, avec décalage excentrique, dans un évidement conique latéral (16) du boulon d'ancrage (7), pour le déplacer axialement, et ce boulon d'ancrage (7) étant engagé de façon à pouvoir s'encliquerter dans une partie postérieure (22) du noyau d'insertion (3), le noyau d'insertion (3) comportant une fixation à encliquetage (22) qui coopère avec l'extrémité postérieure (19) du boulon d'ancrage, caractérisé en ce que le boulon d'ancrage (7) est prolongé par une tige (18) comportant une section terminale (19) agrandie, et en ce que le noyau d'insertion (3) est muni de doigts d'écartement (23) et comporte des cames (24) faisant saillie vers l'intérieur, pour s'engager derrière la section terminale agrandie (19).

2. Dispositif de serrage selon la revendication 1, caractérisé en ce que la fixation à encliquetage est remplacée par une douille (30) formée d'un seul tenant, comportant au moins une fente longitudinale (31) dans laquelle est guidée une broche (32) disposée diagonalement dans la tige (18).

3. Dispositif selon la revendication 2, caractérisé en ce que la fente longitudinale (31) s'étend hélicoïdalement sur un quart de cercle, pour faire tourner la tête (8) de 90° par une translation axiale.

# FIG.1

Fig. 2